# EUROPEAN PATENT APPLICATION

(11) **EP 4 520 924 A1**
(43) Date of publication of application: **12.03.2025**
(21) Application number: 24199842.6
(22) Date of filing: 11.09.2024
(51) Int. Cl.: F01D 5/28

(54) **CMAS-PROTECTIVE COATING INFILTRANTS**

(30) Priority: 11.09.2023 US 202363537796 P; 10.09.2024 US 202418829763
(71) Applicant: RTX Corporation, Farmington, CT 06032 (US)
(72) Inventor: SPAETH, Andrew Douglas, Holden, 01520 (US); JACKSON III, Richard Wesley, Mystic, 06355 (US); BEALS, James T., West Hartford, 06107 (US); ZHU, Tianli, Glastonbury, 06033 (US)
(74) Representative: Dehns

(57) **Abstract**

A method for protecting a coated substrate having a porous ceramic barrier coating includes applying a molten salt to the ceramic barrier coating. The salt is selected from the group consisting of one or more acetates and/or nitrates. The molten salt is infiltrated into porosity of the ceramic barrier coating. The infiltrated molten salt is solidified. The solidified salt is sintered.

## Description

### BACKGROUND

The invention relates to gas turbine engines. More particularly, the invention relates to addressing calcium magnesium aluminosilicate (CMAS).

Gas turbine engines (used in propulsion and power applications and broadly inclusive of turbojets, turboprops, turbofans, turboshafts, industrial gas turbines, and the like) have combustor and turbine sections that operate at high temperature (the "hot section" of the engine).

Extremely fine dust, including calcium, magnesium, aluminum, and silicon oxides (CMAS), is a major problem for modem jet engines. It is mostly found in and above desert areas but can drift into other areas as well. CMAS is a problem because it is ingested by the engine and melts in the combustion chamber. The liquid CMAS deposits on the airfoils and walls (e.g., gaspath inner diameter (ID) and outer diameter (OD) surfaces) of the hot section of the engine and infiltrates the ceramic thermal barrier coatings that protect them. The ceramic coatings have either a columnar structure or controlled porosity that gives them strain tolerance to compensate for the different thermal expansion rates between the coating and the metallic substrate. The CMAS seeps into the gaps and porosity. When the engine is shut down, it cools, the CMAS can freeze, reducing or eliminating the strain tolerance of the coating. The resulting build-up of stresses as the metallic substate cools and contracts can cause the ceramic coating to spall after multiple cycles.

There have been various proposals to apply supplemental coating(s) to spalled regions so as to extend service life.

Examples are found in US Patent Publication 2022/0136095A1 (the `095 publication), May 5, 2022, "Reactive Phase Spray Formulation Coatings", US Patent Publication 2021/0324201A1 (the `201 publication), October 21, 2021, "Consumable Coatings and Methods of Protecting A High Temperature Component from Dust Deposits", and US Patent Publication 2021/0277523A1 (the `523 publication), September 9, 2021, "Coating Systems Including Infiltration Coatings and Reactive Phase Spray Formulation Coatings".

CMAS is not merely relevant to engines producing thrust for aircraft but also helicopter engines, armored land vehicle (wheeled or tracked) engines, ships, and the like.

### SUMMARY

One aspect of the invention involves a method for protecting a coated substrate having a porous ceramic barrier coating. The method comprises applying a molten salt to the ceramic barrier coating. The salt is selected from the group consisting of one or more acetates and/or nitrates. The molten salt is infiltrated into porosity of the ceramic barrier coating. The infiltrated molten salt is solidified. The solidified salt is sintered.

An optional embodiment of any of the foregoing embodiments may, additionally and/or alternatively, include melting to form the molten salt, wherein the melting is at a temperature of 20°C to 350°C (optionally 30°C to 350°C or 30°C to 300°C or 30°C to 130°C).

In an optional embodiment of any of the foregoing embodiments, additionally and/or alternatively, the salt may comprise at least 90% (or consists of or consists essentially of) by weight material selected from the group consisting of: lanthanide salts and transition metal salts. The salt may optionally form at least 50% by weight of a total infiltrant/infiltrate.

In an optional embodiment of any of the foregoing embodiments, additionally and/or alternatively, the salt may comprise at least 90% (or consists of or consists essentially of) by weight material selected from the group consisting of: cerium acetate; cerium nitrate; hafnium acetate; hafnium nitrate; zirconium acetate; zirconium nitrate; lanthanum acetate; lanthanum nitrate; gadolinium acetate; gadolinium nitrate; yttrium acetate; and yttrium nitrate.

In an optional embodiment of any of the foregoing embodiments, additionally and/or alternatively, the may salt comprise at least 90% (or consists of or consists essentially of) by weight material selected from the group consisting of: lanthanum acetate; lanthanum nitrate; gadolinium acetate; gadolinium nitrate; yttrium acetate; and yttrium nitrate. The salt may optionally form at least 50% by weight of a total infiltrant.

In an optional embodiment of any of the foregoing embodiments, additionally and/or alternatively, the may salt comprise 50% to 100% by weight one of lanthanum acetate and lanthanum nitrate. And the salt may optionally form at least 50% by weight of a total infiltrant/infiltrate.

In an optional embodiment of any of the foregoing embodiments, additionally and/or alternatively, the infiltrating may comprise an infiltrant/infiltrate of the molten salt and one or more particulates.

In an optional embodiment of any of the foregoing embodiments, additionally and/or alternatively, the one or more particulates may comprise: one or more rare earth or transition metal acetates and/or nitrates.

In an optional embodiment of any of the foregoing embodiments, additionally and/or alternatively, the one or more particulates may comprise: one or more rare earth or transition metals or oxides.

In an optional embodiment of any of the foregoing embodiments, additionally and/or alternatively, the infiltrating may comprise an infiltrant/infiltrate of the molten salt and one or more organic polymers; and the one or more organic polymers form 0.1% to 10% of the infiltrant by weight.

In an optional embodiment of any of the foregoing embodiments, additionally and/or alternatively, the applying may comprise: at least partial immersion in a melt pool; and applying external pressure to a headspace of the melt pool.

In an optional embodiment of any of the foregoing embodiments, additionally and/or alternatively, the applying may comprise brushing or spraying.

In an optional embodiment of any of the foregoing embodiments, additionally and/or alternatively, the sintering may comprise: heating to a temperature of 500°C to 1000°C in a non-reducing atmosphere with the oxygen partial pressure at least 10⁻⁶ atm. (10⁻⁴ kPa).

An optional embodiment of any of the foregoing embodiments may, additionally and/or alternatively, include preparing the coated substrate by cleaning or degreasing the coated substrate followed by masking off any areas where the infiltrating is not desired (e.g., masking off selected areas of the coated substrate to prevent infiltrating the molten salt in the selected areas).

In an optional embodiment of any of the foregoing embodiments, additionally and/or alternatively, the melting may comprise melting at least one powder.

In an optional embodiment of any of the foregoing embodiments, additionally and/or alternatively, the coated substrate may be, or may be comprised by, a turbine engine component selected from the group consisting of blades, vanes, and combustor liners.

Another aspect of the invention involves a coated article comprising: a substrate; one or more layers of ceramic coating material having porosity; and a filler in the porosity comprising lanthana and zirconia.

In an optional embodiment of any of the foregoing embodiments, additionally and/or alternatively, the article may be a turbine engine component selected from the group consisting of blades, vanes, and combustor liners.

In an optional embodiment of any of the foregoing embodiments, additionally and/or alternatively, the ceramic coating may have a YSZ layer and/or a GdZ layer. The layer(s) may be columnar.

Another aspect of the invention involves, a method for protecting a coated substrate having a porous ceramic barrier coating, the method comprising: placing the coated substrate in a vessel; drawing vacuum from and/or adding pressure to the vessel; infiltrating into the porosity, a melt comprising a molten salt; solidifying the infiltrated molten salt; and sintering the solidified salt so as to oxidize and liberate carbon and/or nitrogen oxides.

In an optional embodiment of any of the foregoing embodiments, additionally and/or alternatively, the infiltrating may further comprise pressurizing the vessel. The method may infiltrate to fill at least 10% of inter-columnar gap volume.

In an optional embodiment of any of the foregoing embodiments, additionally and/or alternatively, the salt may be an acetate or nitrate. The melt may have a solid metal oxide filler.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a schematic sectional view of a coating system.
FIG. 1A is an enlarged view of the coating system showing porosity.
FIG. 2 is a schematic sectional view of the coating system exposed to CMAS.
FIG. 3 is a schematic sectional view of the coating system during spalling.
FIG. 4 is a schematic sectional view of the coating system during protective infiltration.
FIG. 4A is an enlarged view of a region of the coating of FIG. 4.
FIG. 5 is a schematic sectional view of the coating system after infiltrant sintering.
FIG. 5A is an enlarged view of a region of the coating of FIG. 5.
FIG. 6 is a schematic sectional view of a coating system during restoration.

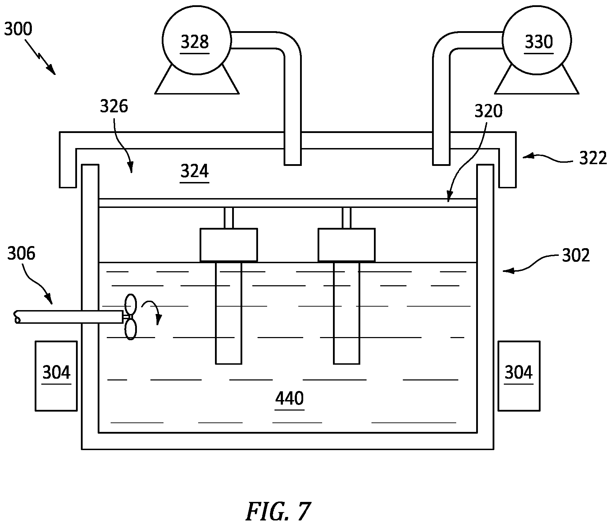

FIG. 7 is a schematic view of an infiltration system.

Like reference numbers and designations in the various drawings indicate like elements.

### DETAILED DESCRIPTION

Molten infiltration of the ceramic by a gettering/binding agent may have advantages over existing solution and suspension techniques. Surface tension-driven transport (e.g., capillary action) may draw the molten agent further into intercolumn and intracolumn porosity. When the molten agent is used as a carrier for additional particulate gettering/binding agent, the transport may draw the molten agent further into some pores than suspension particles.

By using molten agent, a greater quantity of useful material may be infiltrated than with solutions or dilute suspensions wherein the solvent or carrier comprises a large fraction of the volume infiltrated and is then lost. This may save steps in achieving a target degree of infiltration (e.g., one melt infiltration and sintering cycle replacing many solution or suspension infiltration and sintering cycles). Also, it may yield a more continuous and dense (less porous) coating of gaps (e.g., inter-columnar).

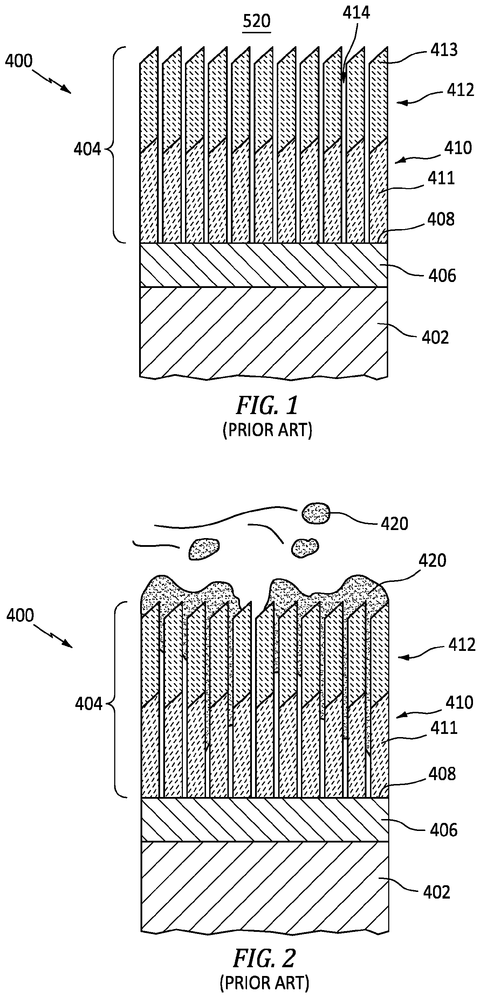

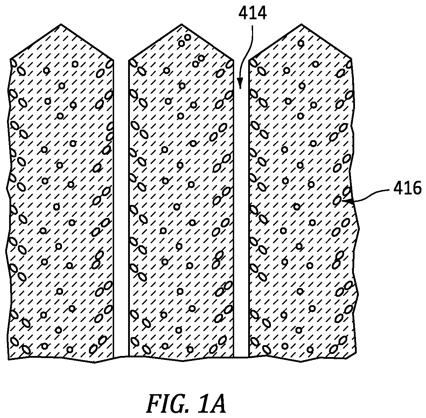

FIG. 1 shows an article 400 as a hot section component of a gas turbine engine. The component is exposed to the gaspath 520 of the engine and has a metallic substrate 402 and a baseline initial as-applied CMAS-resistant thermal barrier coating system 404. The coating may thus be on the gaspath-facing surface of a blade (airfoil exterior, platform OD surface and shroud (if any) ID surface), vane (airfoil exterior, platform (if any) OD surface and shroud ID surface), strut, and the like.

The example system schematically includes a bond coat (e.g., thermal sprayed MCrAlY) 406 atop a surface 408 of the substrate. A base layer 410 of the TBC is atop the bond coat. A CMAS-binding layer 412 is atop the base layer. The example base layer 410 is yttria stabilized zirconia (YSZ), namely 7YSZ. The example CMAS binding layer is gadolinium zirconate (GDZ or GZO), for example 59 GZO. This is illustrative. But typically, the binder will contain gadolinia. Additional aspects (not shown) may include artifacts such as a thermally grown oxide (TGO) layer or additional features such as a sealant or topcoat atop the binder.

The example base layer 410 and binding layer 412 are columnar crystalline structures (with respective columns 411 and 413 and intercolumnar gaps 414 and intracolumnar porosity 416 (FIG. 1A) deposited by electron beam physical vapor deposition (EBPVD). In service, CMAS 420 (FIG. 2) deposits atop the surface of the binding layer 412 and will have both intercolumnar and intracolumnar infiltration of the binding layer 412. Alternatives for one or both layers include thermal spray such as air plasma spray, solution plasma spray, or suspension plasma spray and may include non-columnar structures.

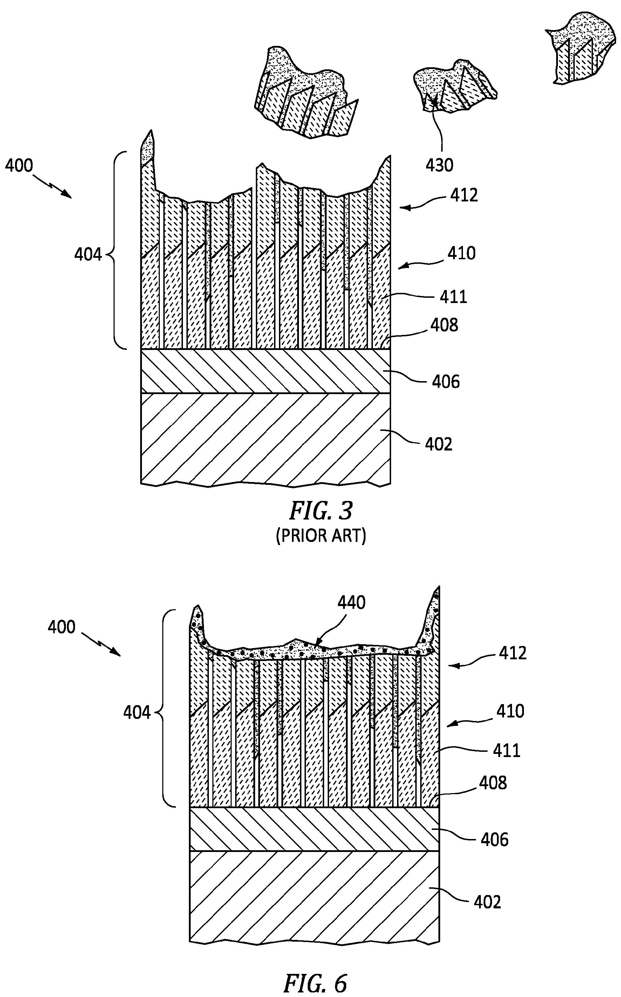

As noted above, the CMAS-infiltrated binding layer 412 material will have differential thermal expansion relative to the uninfiltrated base layer 410 and/or have less ability to accommodate differential thermal expansion of the substrate than does the base layer. This can lead to spalling off of pieces 430 (FIG. 3) of the deposits including the infiltrated binding layer 412 material exposing uninfiltrated binding layer material 412 below and/or base layer 410 material.

To help combat CMAS infiltration, the coating may be pre-infiltrated with a gettering/binding agent. This may fill the porosity with a material more CTE-compatible with the coating and also reduce the amount of CMAS that may infiltrate. Also, the gettering/binding effect involves the infiltrant/infiltrate serving as an apatite-former that reacts with initial CMAS to resist further CMAS infiltration.

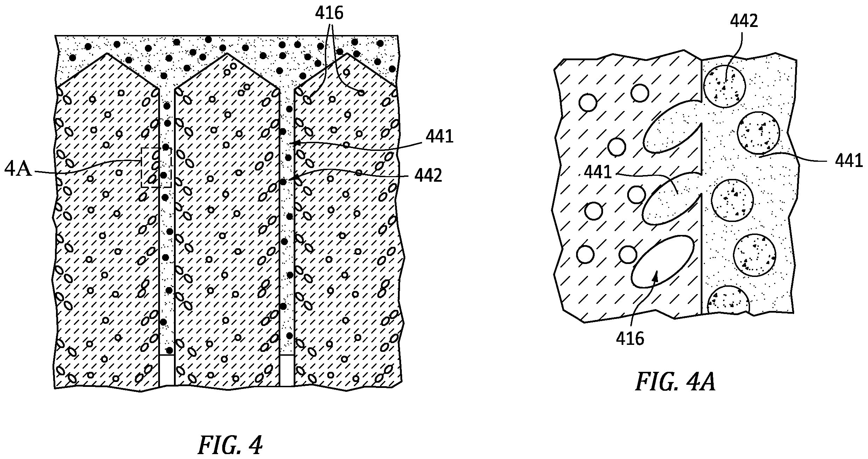

FIGs. 4 and 4A show infiltration of example infiltrant/infiltrate 440 comprising melt 441 (inclusive of any dissolved or other liquid) and particulate 442 into the porosity 414, 416. Alternatives may omit particulate. The melt 441 may have local infiltration into porosity 416 adjacent the gaps 414. Due to typical porosity size, the particulate 442 is unlikely to have such infiltration and may remain in the gaps 414 and atop the columns.

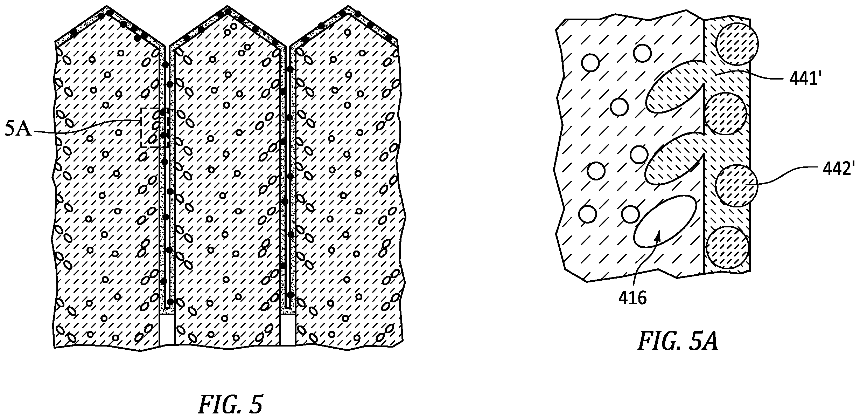

FIGs. 5 and 5A show a post-sintering condition. The example sintering is in a heating that decomposes the salt(s) and oxidizes and sinters the gettering/binding element(s). FIG. 5 shows oxides 441' and 442' respectively formed by the melt and particulate. The sintering may cause loss of volume of infiltrant melt and/or particles. Additionally, the heating of the sintering process may drive infiltrant further into porosity. Thus, even where the initial infiltration filled the intercolumnar gaps/porosity 414, the sintering may reopen such gaps 414 but may leave coating along the column sides, thus narrowing the gaps 414. Additionally, there may be differential effects within the intercolumnar gaps 414 relative to along the tops of the columns. For example, the melt may be drawn into the gaps, leaving a disproportionately high fraction of particulate along the column tops. This may further be exacerbated if the particle size distribution of the particulate is such that some are too large to flow into the gaps 414 during infiltration (or are blocked by accumulations of initially/previously-infiltrated particles that may, nevertheless, allow further melt to infiltrate).

Additionally or alternatively, after CMAS-induced spalling, the infiltrant 440 (FIG. 6) may be used to deposit (or redeposit) binder material in place of original binding layer 412 material or prior restorations. This may be done via spray. As discussed further below, this may be an in-service "on wing" process.

Examples below involve melting one or more salts of a rare earth element and/or hafnium and/or zirconium, in particular acetates and/or nitrates. The melt may be formed by melting powder(s). As is discussed further below, the melt may contain components (in solid, dissolved, or melted form) other than the molten salt. These may be added to a melt of the salt(s) or may initially be mixed with the salt powder that melts. Particularly with the lower temperature range of molten salts, some of these additives may initially be and remain liquid (e.g., possible low melt point polymers). Others may remain solid in suspension. Others may dissolve or melt in the pool. With such additives, there may be continuous active agitation/mixing to maintain component distribution.

Post-infiltration heating may sinter and decompose the salt to form oxides of the gettering/binding element(s). The decomposition pathways for nitrates and acetates are well known in the chemical literature and textbooks when heated to sufficient temperatures. Acetate metal salts decompose typically evolving water and some acetate groups while eventually forming intermediary metal oxycarbonates, followed by the desired metal oxides and evolving carbon dioxide gas. K. C. PATIL, et al., "Infrared spectra and thermal decompositions of metal acetates and dicarboxylates", Canadian Journal of Chemistry, January, 1968, Vol. 46, No. 2, pp. 257-265, Canadian Science Publishing, Ottawa, Ontario, Canada. Nitrate metal salts decompose into the corresponding metal oxide releasing any absorbed water and nitrogen oxide species.

In one group of examples, the part(s) or component(s) to be treated each are coated a substrate 400 that may represent a baseline component (prior art or other) that otherwise would be ready for installation and entry into service. Key examples include cast metallic substrates 402 having single- or multi-layer thermal barrier coatings (TBC) 404. One example of a general baseline manufacture process is casting a metallic substrate (e.g., investment casting with sacrificial core(s) to produce internal passageways for blades or vanes). A shell may be formed over wax patterns containing the cores (if any). After dewaxing and shell firing, molten alloy is cast in the shell and then allowed to cool to solidify. After deshelling and decoring (if any), there may be machining (e.g., including mounting features such as blade roots and potentially including machining of outlet holes for internally-cooled substrates).

Example components are blades, vanes, and combustor panels. The machined substrate may be subject to environmental and/or corrosion coating processes such as internal aluminization and coating of non-gaspath external surfaces. TBC application may include application of an initial base layer or bond coat 406. Example bond coats are MCrAlY applied by thermal spray, cathodic arc spray, or other technique. Example ceramic layers 410, 412 include one or more of yttria stabilized zirconia (YSZ such as 7YSZ) and gadolinium zirconate (GdZ or GZO) applied by thermal spray and/or physical vapor deposition (e.g., electron beam physical vapor deposition).

The present infiltration process may be added after application of the baseline TBC. More broadly, it may be added after at least one ceramic layer has been applied. For example, some baseline processes include application of a dense ceramic topcoat (not shown). The present infiltration and sintering may be added prior to topcoat application of the baseline process.

Depending upon the implementation, there may be masking of areas away from the TBC (e.g., masking of blade root and underplatform surfaces). In some implementations, this may involve using masking already on the component. Such existing masking may be that used during the application of the ceramic layer(s). Similarly, there may be a fixturing step. Again, this may be a baseline fixturing. In some implementations, the fixture and mask may be the same.

In one group of examples, the salt to be melted and any other ingredients are blended as powders and melted in a system/apparatus 300 having a vessel 302 (e.g., via a resistance heater 304). Alternatively, the salt, or the main salt (e.g., lower melting point) may be melted in the vessel and the remaining salt and other particulate added to the melt. Example melt pool temperature is 20°C to 350°C (optionally 30°C to 350°C or 30°C to 300°C or 30°C to 130°C). An alternative lower limit for any of those upper limits is 40°C or 50°C or a delta of 5°C or 10°C above the melt point of the salt to be melted. As noted above, the apparatus may include a rotary or other agitator/mixer 306 to maintain distribution. The relevant ceramic-coated portions of the components may then be immersed in the melt pool. Depending upon implementation, this may be done by a robot manipulator and/or may be done as a batch process wherein multiple components are held on a rack 320 or other fixture for immersion. The melt vessel may then be closed (e.g., via closing a lid or cover 322 on the melt vessel). Vacuum may be drawn from a headspace 324 of the interior 326 to help lower pressure and evacuate any air from the ceramic. This may be done by a vacuum pump 328. Then, overpressure may be applied (e.g., over atmospheric) (e.g., via the same pump or other pump or pressure source 330) to help drive infiltrant 440 (melt plus particulate (if any)) into the porosity of the ceramic. The pressure may then be relieved via venting to atmosphere and the vessel opened and component(s) withdrawn from the vessel.

Optionally, the component(s) may be allowed to cool. Or there may be active cooling such as forced air. This will solidify the infiltrant. The component(s) may then be placed into a furnace for heating and sintering. An example furnace is an atmospheric furnace that allows oxygen from the air to oxidize unoxidized infiltrant. Example heating involves a ramp up to a final sintering temperature of at least 500°C (e.g., 500°C to 1000°C, more narrowly, 500°C to 900°C). Example furnace environment is non-reducing in that it has low, if any, hydrogen. Depending upon desired process parameters (such as relative rate of sintering versus decomposition/oxidation), the composition of the furnace atmosphere may be varied. For example, to increase oxidation it may be oxygen-enriched such as via introducing supplemental oxygen to the air (e.g., via oxygen from a gas cylinder). Alternatively, to slow oxidation, it may be nitrogen-enriched (e.g., via nitrogen from a gas cylinder). Although overall pressure may be at atmospheric pressure, alternative embodiments may involve positive pressure (introduced via air pump or via gas cylinders). Depending on implementation, pressure and/or composition may be varied during the sintering process to achieve desired results. Example oxygen partial pressure is 0.10 to 0.25 atm. (10 to 25 kPa) for an atmospheric pressure furnace or, more generally, at least 10⁻⁴ kPa or 1.0 kPa or 10 kPa or 10% to 50% by volume of the gas in the furnace. During this process, decomposition and oxidation may occur as noted above.

Optionally, the infiltration and sintering process may be repeated to further fill porosity.

Table 1 below shows candidate infiltrant salts for use as melt and/or particulate.

**Table I**

| Salts | | |
|---|---|---|
| Salt Name | Published Melting point (MP)(°C) | Metal oxide formed upon sintering |
| Lanthanum acetate | 110 | Lanthanum oxide (lanthana) |
| Lanthanum nitrate | 40 | Lanthanum oxide |
| Gadolinium acetate | 117 | Gadolinium oxide (gadolinia) |
| Gadolinium nitrate | 91 | Gadolinium oxide |
| Yttrium acetate | 285 | Yttrium oxide (yttria) |
| Yttrium nitrate | 52 | Yttrium oxide |
| Cerium acetate | 308 | Cerium oxide (ceria) |
| Cerium nitrate | 57 | Cerium oxide |
| Hafnium acetate | * | Hafnium oxide (hafnia) |
| Hafnium nitrate | 300 | Hafnium oxide |
| Zirconium acetate | 243 | Zirconium oxide (zirconia) |
| Zirconium nitrate | * | Zirconium oxide |

| | | |
|---|---|---|
| *Not found in literature | | |

In general, the lower melting point materials may have handling or other advantages. For example, the lower melting point nitrates, in molten form, can more easily be handled/contained; whereas, higher melting points impose additional requirements.

An area for additives involves organic polymer gelling agents such as polyvinyl alcohol (PVA - melting point 200°C). This may be particularly relevant to the lower melting point range wherein PVA may dissolve within the melt pool or be present in suspension, vs. decomposing at temperatures of around 300°C or greater. For example, dissolved PVA may modify viscosity so as to aid infiltration.

The PVA may act as a melting point depressant.

In one example of use of organic polymer, about 1.0% by weight PVA is added to lanthanum nitrate. The example melt pool temperature is 50°C. The low amount of PVA by weight is believed effective to aid infiltration. The low amount may be desirable because sintering will vaporize or decompose/volatilize PVA resulting in extra porosity.

There are several options for additional components and/or particulate fillers. As noted above, one group of examples may nevertheless use multiple salts from Table I but have the melt pool heated to a temperature above one or more of the lower melting points but below one or more of the higher melting points so that the latter salts remain as particulates in a suspension having a carrier of the former.

Other fillers include particulates of elements or compounds. Particular candidates for such are the rare earth elements themselves and their compounds (e.g., oxides) plus zirconia and hafnia and their compounds. Table II below shows several combinations. Example melt pool temperatures are 10°C above the melt point of the main salt. More broadly, example temperatures are 5°C to 100°C above the melt temperature of the highest melting point salt desired to be melted or 5°C to 50°C above.

For ease of reference, Table II identifies a primary melt constituent and one or more secondary constituents (in lower concentrations). The secondary constituents may remain in particulate form; melt along with the primary constituent, or dissolve into the molten primary constituent (e.g., at a melt pool temperature less than the meting temperature of the particular secondary constituent).

**Table II**

| Salts-Filler Combinations | | | | | | |
|---|---|---|---|---|---|---|
| Molten Salt | | Melt Pool Particulate Filler or Secondary Melt/Solute | | | | Pool Temp. (°C) |
| | | Filler 1 | | Filler 2 | | |
| Name | MP (°C) | Name | %Wt. | Name | %Wt. | |
| Lanthanum acetate | 110 | PVA | 1 | Lanthana | 5 | 120 |
| Lanthanum nitrate | 40 | Lanthana | 10 | | | 50 |
| Gadolinium acetate | 117 | Yttria | 5 | | | 127 |
| Gadolinium nitrate | 91 | Gadolinium acetate†† | 5 | Lanthanum acetate†† | 5 | 101 |
| Yttrium acetate | 285 | Yttria | 5 | | | 295 |
| Yttrium nitrate | 52 | Yttrium acetate†† | 25 | | | 62 |
| Cerium acetate | 308 | Ceria nanoparticles | 10 | | | 318 |
| Cerium nitrate | 57 | Ceria | 5 | | | 67 |
| Hafnium acetate | * | PVA† | 1 | | | |
| Hafnium nitrate | 300 | Lanthanum nitrate† | 5 | Cerium nitrate† | 1 | 310 |
| Zirconium acetate | 243 | Zirconia fiber | 1 | | | 253 |
| Zirconium nitrate | * | | | | | |
| Gadolinium nitrate | 91 | PVA† | 1 | Zirconia | 5 | 101 |
| Lanthanum acetate | 110 | Zirconia | 5 | | | 120 |
| Lanthanum nitrate | 40 | Yttria nanoparticles | 1 | Yttria | 2 | 50 |

| | | | | | | |
|---|---|---|---|---|---|---|
| *Not found in literature † Secondary Melt †† Solute | | | | | | |

For the solutes listed by the ††, there may be a substantial variation in the amount dissolved from fully dissolved to only partially dissolved depending on the relative quantities and the temperature.

The example Tabel II first column salt may represent at least 50%, by weight of the melt pool/infiltrant and of the total particulate blend. More broadly, the salts (if blended) may represent at least 50% by weight%, by weight of the melt pool/infiltrant and of the total particulate blend. more narrowly for each at least 60% or at least 80%.

Example oxide particle additives are up to 40% by weight of the melt pool/infiltrate and of the total blend, more narrowly up to 30% or 25% with lower limits for ranges of 1% or 4% or 5%.

For infiltration into the intracolumnar pores, it is unlikely that even nanoparticles will infiltrate. Example nanoparticulate size is up to 0.50 micrometer measured as by ASTM E3247, more narrowly 0.0050 micrometer to 0.20 micrometer or 0.010 micrometer to 0.20 micrometer. Such nanoparticulate may principally coat the intercolumnar pores/gaps.

Non-nanoparticulate may be above 0.50 micrometer (e.g., up to 10.0 micrometers. Larger particles such as 1.0 micrometers to 10.0 micrometers or 2.0 micrometers to 10.0 micrometers may tend to accumulate atop columns and spanning the gaps. Thus, a size distribution may be selected for a particular combination of intercolumnar infiltration and surface coating in view of the ceramic coating morphology. In Table II above, several oxides are identified as nanoparticles or fiber. The others may be the non-nanoparticulate size ranges mentioned above.

Fibers may be relevant to structural reinforcement this may be particularly relevant to forming a surface layer atop the columns. Example material available as fibers include zirconia. Others may include the oxides noted in Table I above. Example fiber diameters are at least 1.0 micrometer, e.g., 1.0 micrometer to 15.0 micrometers. Example lengths are at least twice the diameters or at least 10 times.

Also, there may be additional additives. Depending upon the circumstance, some of these additives may remain solid rather than melting. In that case, the molten compound acts as a carrier for a suspension of the particulate and may allow achieving combined benefits. For example, the particulate may be fine metal particulate (no example in Table II), or compounds such as oxides. Thus, if fine powder is infiltrated using lower melting point carrier, the solidified carrier plus the fine powder yields greater filling of porosity than had the fine powder been introduced via aqueous or similar carrier. In contrast, if the filler includes the base element in metal form, it will draw oxygen enhancing porosity filling and the oxide will be essentially neutral.

One example of such particulate may involve particulate with the same base material as one or more of the melt materials. For example, Table II gives an example of yttrium acetate filler in a yttrium nitrate melt. In that example, the melt pool would be at a temperature above the 52°C melting point of yttrium nitrate but below the 285°C melting point of yttrium acetate. Relative to simply heating above the latter melting point, this offers ease of use of handling and energy efficiency benefits.

Additionally, Table II shows an examples of a filler of the oxide of the salt's base metal in a melt of its salt, e.g., yttrium acetate salt as the melt with yttria as filler. This may have benefit in volumetric efficiency in that salt decomposition may reduce porosity-filling the ultimate sintered material.

Alternatives may involve dissimilar/different base elements such as lanthanum nitrate melt material and yttria particulate.

In addition to the immersion technique, other application techniques include spray or brushing. Whereas immersion may be easy to do for an isolated part, it may not be easy to do in an on-wing situation. Spraying or brushing may be particularly relevant to on-wing situations or situations involving infiltrating larger components or assemblies.

In an example on-wing or partial disassembly (e.g., engine removal but not removing the part to be coated), a pump may draw a flow of heated infiltrant from the melt vessel to be discharged from a spray outlet of a spray gun or wand/probe. Such probe may be inserted through existing/baseline inspection port(s) or dedicated added ports. The infiltrant is discharged from one or more outlets at an end of the probe. The relevant rotor(s) may be rotated during such spraying. The infiltrant cools and solidifies. The sintering/decomposition/oxidation may occur in-use by running the engine.

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

One or more embodiments have been described. Nevertheless, it will be understood that various modifications may be made. For example, when applied to an existing baseline coated article, details of such baseline may influence details of particular implementations. Accordingly, other embodiments are within the scope of the following claims.

## Claims

1. A method for protecting a coated substrate (402) having a porous ceramic barrier coating (404), the method comprising:
applying a molten salt (441) to the ceramic barrier coating (404), the salt selected from the group consisting of:
one or more acetates and/or nitrates;
infiltrating the molten salt into porosity (414, 416) of the ceramic barrier coating (404);
solidifying the infiltrated molten salt; and
sintering the solidified salt.

2. A method for protecting a coated substrate (402) having a porous ceramic barrier coating (404), the method comprising:
placing the coated substrate (402) in a vessel (302);
drawing vacuum from and/or adding pressure to the vessel (302);
infiltrating into the porosity (414, 416), a melt (441) comprising a molten salt;
solidifying the infiltrated molten salt; and
sintering the solidified salt so as to oxidize and liberate carbon and/or nitrogen, optionally, wherein:
the infiltrating further comprises pressurizing the vessel (302) and the method infiltrates to fill at least 10% of inter-columnar gap volume; and/or
the salt is an acetate or nitrate and the melt (441) has a solid metal oxide filler.

3. The method of claim 1 or 2 comprising:
melting to form the molten salt, wherein:
the melting is at a temperature of 20°C to 350°C; and/or
the melting comprises melting at least one powder.

4. The method of claim 1, 2 or 3 wherein:
the salt comprises at least 90% by weight material selected from the group consisting of:
lanthanide salts and transition metal salts.

5. The method of claim 1, 2 or 3 wherein:
the salt comprises at least 90% by weight material selected from the group consisting of:
cerium acetate;
cerium nitrate;
hafnium acetate;
hafnium nitrate;
zirconium acetate;
zirconium nitrate;
lanthanum acetate;
lanthanum nitrate;
gadolinium acetate;
gadolinium nitrate;
yttrium acetate; and
yttrium nitrate; and
the salt forms at least 50% by weight of an infiltrant, optionally, wherein:
the salt comprises at least 90% by weight material selected from the group consisting of:
lanthanum acetate;
lanthanum nitrate;
gadolinium acetate;
gadolinium nitrate;
yttrium acetate; and
yttrium nitrate.

6. The method of any preceding claim wherein:
the salt comprises:
50% to 100% by weight one of lanthanum acetate and lanthanum nitrate.

7. The method of any preceding claim wherein:
the infiltrating comprises an or the infiltrant (440) of the molten salt and one or more particulates.

8. The method of claim 7 wherein:
the one or more particulates comprise:
one or more rare earth or transition metal acetates and/or nitrates; and/or
one or more rare earth or transition metals or oxides.

9. The method of any of claims 1 to 6 wherein:
the infiltrating comprises an or the infiltrant (440) of the molten salt and one or more organic polymers; and
the one or more organic polymers form 0.1% to 10% of the infiltrant (440) by weight.

10. The method of any preceding claim wherein:
the applying comprises:
at least partial immersion in a melt pool; and
applying external pressure to a headspace (324) of the melt pool.

11. The method of any of claims 1 to 9 wherein:
the applying comprises:
brushing or spraying.

12. The method of any preceding claim wherein:
the sintering comprises:
heating to a temperature of 500°C to 1000°C in a non-reducing atmosphere with the oxygen partial pressure at least 10⁻⁶ atm (10⁻⁴ kPa).

13. The method of any preceding claim further comprising:
preparing the coated substrate (402) by:
cleaning or degreasing the coated substrate (402) followed by masking off any areas where the infiltrating is not desired.

14. The method of any preceding claim wherein:
the coated substrate (402) is a turbine engine component selected from the group consisting of blades, vanes, and combustor liners.

15. A coated article (400) comprising:
a substrate (402);
one or more layers of ceramic coating material having porosity (414, 416); and
a filler in the porosity (414, 416) comprising lanthana and zirconia.
